# EUROPEAN PATENT SPECIFICATION

(11) **EP 4 334 186 B1**
(45) Date of publication and mention of the grant of the patent: **30.04.2025**
(21) Application number: 23713962.1
(22) Date of filing: 28.02.2023
(51) Int. Cl.: B61L 23/04, G06T 7/00, G06V 20/52, G06V 20/64

(54) **AUTOMATIC DIGITAL INSPECTION OF RAILWAY ENVIRONMENT**
AUTOMATISCHE DIGITALE INSPEKTION EINER EISENBAHNUMGEBUNG
INSPECTION NUMÉRIQUE AUTOMATIQUE D'ENVIRONNEMENT FERROVIAIRE

(30) Priority: 02.03.2022 GB 202202920
(43) Date of publication of application: 13.03.2024
(73) Proprietor: Hack Partners Limited, Devizes Wiltshire SN10 1HT (GB)
(72) Inventor: KAY, Sebastian Adam, London Court Mill Street London SE1 2BF (GB); TARGINO DA COSTA, Andre Luiz Nunes, London SE1 6EE (GB); PARANDEH, Alireza, London W7 1JG (GB)
(74) Representative: Basck Limited
(86) International application number: PCT/IB2023/051849
(87) International publication number: WO 2023/166411

(56) References cited:
- EP-A1- 3 138 754
- US-A1- 2016 221 592
- US-A1- 2018 297 621
- FURITSU YUKI ET AL: "Semantic Segmentation of Railway Images Considering Temporal Continuity", 23 February 2020, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 639 - 652, XP047536376

## Description

### TECHNICAL FIELD

This invention relates to railway assets. In particular, though not exclusively, this invention relates to a method for automatic digital inspection of a railway environment and a system for automatic digital inspection of a railway environment.

### BACKGROUND

Normally, maintenance of railway assets is a key component in the railway industry. The maintenance of the railway assets is performed by maintenance workers to ensure that entire railway infrastructure is safe and reliable, by carrying out inspections related to signalling and power supplies, railway tracks and bridges, embankments, fences, level crossings, railway environment, safe cess paths and so forth. In this regard, intelligent software is used to collect and analyse data about usage so that predictive and preventative maintenance can be carried out rather than reactive repairs.

Conventionally, manual inspections may be used to inspect the railway assets along the railway tracks. Herein, the manual inspections involve the maintenance workers walking the railway tracks or riding in train cabs to spot defects across a range of the railway assets on lineside. The defects may be at least one: scrap rail, unwanted vegetation, damaged and/or obscured signs, damaged and/or obscured signals, graffiti and overhead line assets. However, said manual inspections are time consuming, unsafe, and inaccurate. Herein, the manual inspections are inaccurate since the maintenance workers visually inspect and measure conditions of the railway assets, along with encroachments and/or distance and location along the railway infrastructure. Furthermore, the maintenance workers walk the railway tracks and may be struck by rail vehicles. Additionally, the maintenance workers use pen and paper, cellular devices comprising at least one camera, such as mobile phones and mobile tablets, to record data and manually review data captured by the cellular devices.

Nowadays, some automated inspection systems are also being developed. In a United States patent document US 2018/297621 A1 (Matson Kris C. et al; "Vegetation detection and alert system for a railway vehicle"; assigned to Bayer CropScience LP), there are described acquisition devices mountable to a railway vehicle for detecting vegetation, methods comprising detecting vegetation using acquisition devices, and a vegetation detection and alert system for the railway vehicle. The document describes capturing images of an environment of the railway vehicle, forming geospatial images using said images, producing a geometric computer model of the environment using the geospatial images, detecting vegetation in a clearance zone around a railroad track, and a backend server generating an alert related to such detection.

In a European patent document EP 3138754 A1 (Sameer Singh; "Rail track asset survey system"; assigned to Rail Vision Europe Ltd), there is described a railroad track asset surveying system suitable for mounting to a conventional passenger or freight vehicle. The document describes capturing of images using image capture sensors mounted on a railroad vehicle, detection and classification of assets in the captured images, and identification of an asset status characteristic and evaluation of its deviation from a predetermined asset characteristic.

However, such automated inspection systems generate a high volume of output data for example, such as a livestream of cameras imaging the railway assets, a data stream including redundant repetitive detections of a same fault/violation, and similar. Such output data is time consuming and difficult to comprehend, thereby causing errors and delays in determining and undertaking corrective actions. Generation and communication of the high volume of output data is also expensive and inefficient.

Therefore, in light of the foregoing discussion, there exists a need to overcome the aforementioned drawbacks associated with inspection of the railway assets.

### SUMMARY OF THE INVENTION

A first aspect of the invention provides a method for automatic digital inspection of a railway environment, the method comprising:
- receiving at least a first video captured by at least one camera mounted at least on a rail vehicle, wherein the first video comprises video frames representing the railway environment;
- generating point clouds using the video frames, wherein a given point cloud correspond to a given set of video frames;
- attributing labels to each pixel of the video frames for generating annotated video frames;
- evaluating the annotated video frames and their corresponding point clouds using a set of predefined rules to at least determine whether or not at least one violation is present in the railway environment;
- generating inspection information related to the at least one violation, when it is determined that the at least one violation is present in the railway environment;
- sending the inspection information to a user device;
- generating a second video comprising a plurality of annotated video frames that depict the at least one violation, based on the inspection information;
- sending the second video to the user device;
- adding one or more video frames of the first video in the second video;
- merging detections in the second video that depict the same violation into a single detection, based on the location of the at least one violation and its bounding box and on a temporal adjacency between the detections in the second video, to obtain a third video, wherein the third video comprises a lesser number of detections as compared to the second video; and
- sending the third video to the user device for display thereat.

At least the first video is captured by the at least one camera and is received therefrom. In this regard, by "*at least one camera*" it is meant that in some implementations, the at least the first video is captured by a single camera whereas in other implementations, the at least the first video is captured by a plurality of cameras. Herein, correct capturing of the first video depends on attributes associated with the at least one camera. The attributes associated with the at least one camera may be, depth of field of view, motion blur, shutter speed, aperture, distortion of lens, resolution, focal length, frames per second (FPS) and so forth. The at least one camera may be selected in a manner that it captures high-quality (i.e., high resolution) video frames. In an embodiment, the at least one camera is implemented as a visible-light camera. As an example, the at least one camera may be implemented as at least one of: a stereo camera, a Red-Green-Blue (RGB) camera, a RGB-Depth (RGB-D) camera, a monochrome camera. In another embodiment, the at least one camera is implemented as an infrared-light camera. Optionally, the at least one camera may be a depth camera. Examples of the depth cameras include, but are not limited to, a stereo camera, a ranging camera, a Time-of-Flight (ToF) camera, a Sound Navigation and Ranging (SONAR) camera, and a laser rangefinder. The at least one camera is mounted on the rail vehicle in a manner so that the railway environment is in the field of view of the camera. In this regard, it is feasible to mount the at least one camera elsewhere. The first video comprises the video frames captured at different instances of time. In other words, the first video comprises a sequence of the video frames.

In this regard, "video frames" refers to the sequence of images captured by a camera which may be viewed consecutively as a video. A video frame refers to one image captured by a camera. A video frame may also be referred to as an "image frame" or a "sequence frame".

Advantageously, the video frames are captured to get a clear view of the railway environment. Herein, the railway environment comprises, but is not limited to, a railway station, at least one platform, railway track, a station building, passengers occasionally boarding or leaving the rail vehicle, signs, vegetation, overhead lines.

Optionally, the video frames are generated by creating a wrapper to extract the video frames from the first video. In this regard, a software, such as FFmpeg may be used for processing the first video. The first video captured from the at least one camera is split into several video frames.

A point cloud is a visualisation made up of a set of points in space, wherein the points may represent objects. An object may be visualised as a one-dimensional (1D) object, or as a two-dimensional object (2D), or as a three-dimensional (3D) object. Herein, a given point is made up of a corresponding set of Cartesian coordinates (i.e., X, Y and Z coordinates). Advantageously, the point cloud can provide a representation of the 3D object in high-resolution, without distortion. Furthermore, the point cloud may be composed of points measured on the external surface of the objects present in the video frames.

Optionally, the step of generating point clouds using the video frames employs at least one computer vision technique. In an embodiment, in case a given camera that captures 2D images is used, the point cloud can be generated using a Structure from Motion (SfM) technique, wherein a SfM technique can be wrapped using the OpenSfM library. In this regard, a Structure from Motion (SfM) technique is employed. The OpenSfM library is used to generate the point clouds from the video frames, wherein athe given point cloud corresponds to athe given set of video frames. The OpenSfM library can be used to find relative positions of objects in the video frames and to help create smooth transitions between the video frames, by matching the points between the video frames, and then determining 3D positions of those points in the point cloud. In an embodiment, in case the given camera that captures 3D data is used, then the point clouds are generated by processing the 3D data.

It will be appreciated that each pixel can represent a part of an object that can be classified into a class and the object is identifiable unambiguously. Suitably, semantic segmentation treats multiple objects of the same class as a single entity. The video frames are made up of points that are rendered as pixels, and each pixel of the video frames is assigned a label from a predefined set of classes using semantic segmentation, such as vegetation, railway track, signs and so forth. Herein, the label indicates a type of object, such as trees, rail car units, buildings, signals etc. In a first approach, each pixel is classified individually disregarding the label assigned to the other pixels of the video frames. In a second approach, each pixel is classified based on labels of its neighbouring pixels. In a third approach, each pixel of the video frames is labelled jointly by defining a class regarding the pixels, therefore generating the annotated video frames. Subsequently, upon labelling the pixels in the video frame, an annotated video frame is generated. For example, a video frame may comprise a railway track, vegetation, sign, and sky. The video frame may be composed of 1000 pixels. Subsequently, upon semantic segmentation, 250 pixels of the video frame may be attributed as railway track, 250 pixels of the video frame may be attributed as vegetation, 100 pixels of the video frame may be attributed as sign, and 400 pixels of the video frame may be attributed as sky, thereby generating an annotated video frame version of the video frame.

Optionally, the step of evaluating the annotated video frames and their corresponding point clouds may comprise:
- detecting the railway track in the annotated video frames and their corresponding point clouds, and drawing a bounding box in the annotated video frames, wherein the bounding box may be fitted to the railway track;
- associating the labels attributed to pixels of the annotated video frames to corresponding points within the point clouds; and
- determining that the at least one violation may be present in the railway environment when violation conditions specified in the set of predefined rules is satisfied in respect to the bounding box.

Herein, a given bounding box is defined by '*x*' and '*y*' coordinates of its vertices to describe a spatial location of its corresponding object in a given video frame. In this regard, object detection models may be used to detect the railway track in the annotated video frames and their corresponding point clouds. Object detection models are well-known in the art. The 'x' and 'y' coordinates of the bounding box help determine location of the railway track. The labels attributed to the pixels of the annotated video frames enable a given object to spatially associate with respect to other objects in the railway environment. Herein, the set of predefined rules describe the violation conditions. In case any one of the set of predefined rules is satisfied, it signifies that a violation condition has been met. In case any obstruction is detected in the surroundings of a railway track (in particular, of the bounding box), the obstruction results in a violation condition being met with respect to the bounding box.

The annotated video frames and their corresponding points are thoroughly examined to determine presence of at least one violation present in the railway environment, as sometimes the annotated video frame may turn out to be a completely normal image. The term "*violation*" encompasses one or more of: presence of a non-compliant asset that does not comply with industry standards in the railway environment such as hazardous conditions in the railway environment, unwanted obstructions along the railway track. In an embodiment, the step of evaluating the annotated video frames and their corresponding point clouds using the at least one predefined rule is performed to also determine whether or not passengers are present in the railway environment. When it is detected that the passengers are present in the railway environment, the method further comprises counting a number of the passengers.

Optionally, the set of predefined rules may comprise at least one geometric rule and/or at least one custom-defined rule. The set of predefined rules comprise at least one of:
- determining that a high lineside violation may be present when any unwanted object is present in a first space that is defined by two planes extending obliquely within a predefined distance from two rails of a railway track,
- determining that an overhead vegetation violation may be present when vegetation is present in a second space lying vertically above the railway track;
- determining that a sign violation may be present when a given sign in the railway environment is at least one of: obscured by another object, unreadable, vandalised;
- determining that a signal violation may be present when a given signal in the railway environment is at least one of: obscured by another object, malfunctioning, vandalised;
- determining that a safe cess violation may be present when a cess adjacent to the railway track is obstructed at least partially such that a distance between a non-obstructed region of the cess and the railway track is less than a predefined safety distance; and
- determining that a scrap violation may be present when scrap is present on or in proximity of the railway track.

In this regard, the at least one geometric rule may depend on a perspective of the at least one camera while capturing the first video of the railway environment. The at least one geometric rule may depend on position, colour or brightness (i.e., in case a monochrome camera is used) of each pixel of the video frames. The custom-defined rule may be manually defined by the user, or may be automatically generated by the system, or may be a combination of both.

Optionally, the high lineside violation occurs when any unwanted object is too close to the railway tracks. The first space is a space lying in close proximity to the railway track, and when any unwanted object is present in the first space, the high lineside violation occurs. An extent of the first space is defined by the two planes and the predefined distance. An angle between a given plane corresponding to a given rail and a ground surface lies within a range of 30 degrees to 60 degrees. As an example, the angle between a given plane corresponding to a given rail and a ground surface may be 45 degrees. The angle between the given plane corresponding to the given rail and the ground surface may be in a range of from 30 to 40 degrees, or from 30 to 50 degrees, or from 30 to 60 degrees, or from 40 to 50 degrees, or from 40 to 60 degrees, or from 50 to 60 degrees. Correspondingly, an angle between a rail vehicle and the given plane may lie within a range of 60 degrees to 30 degrees. A high lineside violation occurs when an object is present in the latter space between a plane and a rail vehicle.

Optionally, the predefined distance may lie in a range of 0 to 5 metres. The predefined distance may be in a range of from 0 to 3 metres, or from 0 to 4 metres, or from 0 to 5 metres, or from 1 to 4 metres, or from 3 to 5 metres, or from 4 to 5 metres. For example, the predefined distance may be 2 metres. In case, a first object is at a distance of 0.5 metres from the railway track, then the high lineside violation occurs. However, in case a second object is at a distance of 2.5 metres from the railway track, then the high lineside violation does not occur.

Optionally, a given video frame comprises a pixel representation of the vegetation and a pixel representation of the railway track. Subsequently, the given video frame and the corresponding point cloud are used to determine spatial relationship between the pixel representation of the vegetation and the pixel representation of the railway track, wherein the pixel representation of the vegetation is determined to spatially lie above the pixel representation of the railway track. Therefore, the overhead vegetation violation occurs.

Optionally, the sign violation may be determined when size of the given sign is less than expected in the video frame, or the given sign is not visible in the video frame, or visual detail of the given sign is incomprehensible, or similar. Herein, size and location of the signs may be pre-known. The given sign is deemed unreadable due to weathering or vandalization, upon comparing the given sign with reference images of the given sign.

Optionally, signal violation may be determined when a given signal is not visible in the video frame, or the given signal looks different (from an expected appearance) when compared to the reference images related to a functioning signal. The given signal may not be visible in the video frame, or visual detail of the given signal is incomprehensible, or similar. Herein, size, location and function of the given signal may be pre-known.

The safe cess can optionally be understood to be a virtual tunnel (i.e., a virtually-defined space) adjacent to the railway track which ideally should be clear of obstructions, such as vegetation, ballast bags, structures and so forth. The safe cess allows track workers to safely transit the railway environment at a predefined safety distance from the railway track. The safe cess violation is undesirable as it puts the track workers at risk of being too close to the railway track, which could lead to injury or loss of life. A distance between the non-obstructed region of the cess and the railway track can be determined by the pixels in the video frames and their corresponding point clouds.

Optionally, the scrap may consist of unused railway assets such as, but not limited to, sleepers, fixtures, fish plates, condemned coaches, wagons and so forth. Presence of the scrap on or in proximity of the railway track endangers safe functioning of the rail vehicle.

Optionally, the predefined safety distance may depend on a maximum speed at which the rail vehicle is permitted to run on the railway track, and wherein:
- the predefined safety distance may lie in a range of 2 metres to 2.75 metres when the maximum speed is equal to or greater than 100 miles per hour (44.704m/s); and
- the predefined safety distance may lie in a range of 1.25 metres to 2 metres when the maximum speed is less than 100 miles per hour (44.704m/s).

In this regard, greater the maximum speed at which the rail vehicle is permitted to run on the railway track, higher is the predefined safety distance. The predefined safety distance may be in a range of from 2 to 2.50 metres, or from 2 to 2.75 metres, or from 2.25 to 2.75 metres, when the maximum speed is equal to or greater than 100 miles per hour (44.704m/s).

The predefined safety may be in a range of from 1.25 to 1.75 metres, or from 1.25 to 2 metres,, or from 1.50 to 2 metres. As a first example, when the maximum speed is equal to or greater than 100 miles per hour (44.704m/s), then the track workers should be at least 2.4 metres away from the given rail of the railway track. Conversely, when the maximum speed is less than 100 miles per hour (44.704m/s), the track workers should be at least 1.30 metres away from the given rail of the railway track.

The video frames representing (namely, depicting) at least one violation are compiled to generate the inspection information. The term "*inspection information*" refers to information which helps to identify the at least one violation present in the railway environment. With the help of the inspection information, the at least one violation may subsequently be rectified either manually and/or automatically, and/or a combination of both.

Optionally, the inspection information may be in form of at least one of:
- an annotated image representing the at least one violation and its bounding box;
- a file including at least one property of the at least one violation, wherein the at least one property is at least one of: a type, a location, a size, a time-point of occurrence in the first video, of the at least one violation.

In this regard, the annotated image labels the objects which represents the at least one violation that helps to recognize the at least one violation. Herein, the at least one violation and its bounding box may be annotated using text, annotation tools, or a combination of both, to show the objects that comprise the at least one violation. Herein, annotation of a given image representing the at least one violation may be generated by at least one processor. A user may manually supplement annotations generated by the at least one processor. The annotated image may be used to further develop rules for detecting violations. The file may also include metadata of the annotated image, such metadata including coordinates of the bounding box. The file may be of any suitable format, not limited to only a text file.

Throughout the present disclosure, the term "*user device*" refers to an electronic device that is capable of displaying visual content. The visual content may be at least the inspection information. The user device is associated with (or used by) a user and is capable of enabling the user to perform specific tasks associated with the method. Furthermore, the display device is intended to be broadly interpreted to include any electronic device that may be used to facilitate decision-making of the user, by at least displaying the visual content. Examples of the user device include, but are not limited to, laptop computers, personal computers, cellular phones, personal digital assistants (PDAs), handheld devices etc. Additionally, the user device may include a casing, a memory, a processor, a network interface card, a microphone, a speaker, a keypad, and a display. Advantageously, the user device displays output of all the steps in the method of the invention.

The method further comprises:
- generating a second video comprising a plurality of annotated video frames that depict at least one violation, based on the inspection information; and
- sending the second video to the user device.

In this regard, the second video compiles the plurality of annotated video frames depicting the at least one violation and is viewed on the user device as an overview of the at least one violation. For example, a first video may comprise 200 video frames (which may be subsequently annotated), out of which 50 annotated video frames may depict at least one violation. Consequently, the 50 annotated video frames depicting at least one violation are used to generate the second video. The second video thus comprises a lesser number of video frames as compared to the first video. It will be appreciated that when the second video is also sent to the user device, the user can view all annotated video frames that depict the at least one violation. Therefore, in case a violation is not sufficiently well-represented in one annotated video frame, it can be viewed in another annotated video frame representing said violation.

The method further comprises adding one or more video frames of the first video in the second video. Herein, the video frames of the first video are used to fill gaps in case one or more video frames is/are not present in the second video. In such a case where no video frame in the second video represents such a frame, the one or more video frame of the first video that represents such a frame is added to the second video. Advantageously, the one or more video frames required in the second video are stitched in with the help of the first video.

The method further comprises:
- merging detections in the second video that depict the same violation into a single detection, based on the location of the at least one detection and its bounding box and on a temporal adjacency between the detections in the second video, to obtain a third video, wherein the third video comprises a lesser number of detections as compared to the second video; and
- sending the third video to the user device for display thereat.

In this regard, the detections of the second video are too dense since the inspection information related to one violation is present in multiple video frames. However, this results in more detections in the second video to the user than is useful, as several video frames of the second video would depict the same violation. For instance, a railway environment may comprise a railway track, vegetation and a safe cess. There may be a length of the railway track where the vegetation heavily obstructs the safe cess. Herein, a bounding box is drawn around the vegetation heavily obstructing the safe cess. The safe cess violation may be represented by 1 detection in 10 video frames of the second video. Hence, these 10 detections from said length of the railway track are merged into a single detection and labelled as a single violation in a third video to the user, as the second video shows the same violation in 10 video frames. The third video is sent to the user device for the user to make decisions. Advantageously, the technical effect of such merging leads to a reduction of redundant detections. Furthermore, the third video will have only distinct and meaningful detections depicting the at least one violation, thereby enabling quick viewing and ease of further analysis. Moreover, sending the third video leads to efficient usage of communication network bandwidth, and less memory is required in the user device for storing the third video as compared to the second video. Beneficially, cost savings in respect of generation and communication of output data are also achieved when the third video is generated and sent to the user device.

Optionally, the method may comprise receiving LiDAR data captured by a LiDAR scanner, wherein the LiDAR data may also be used for generating the point clouds and for evaluating the annotated video frames and their corresponding point clouds. An example of the LiDAR scanner may include, but is not limited to, a Light Detection and Ranging (LiDAR) camera, and a flash LiDAR camera. The LiDAR scanner comprises a source that laser (wherein, the laser comprises light pulses) to ping off objects in the railway environment and return to the source of the LiDAR scanner, thereby measuring distance by time of flight of light pulse in the laser. Herein, LiDAR data comprises dense and accurate elevation data across landscapes, shallow-water areas and project sites in the railway environment. Furthermore, the LiDAR data is collected from stationary and mobile platforms. The LiDAR data is processed and organised to also generate the point clouds. In other words, the point clouds are optionally generated using the video frames (of the first video) and the LiDAR data. Herein, the point clouds generated using LiDAR data are large collections of 3D elevation points, which include 3D coordinates along with additional attributes such as Global Positioning System (GPS) timestamps. The point cloud corresponds to the video frame, and each point in the point cloud corresponds to one or more pixels in the video frame. Each pixel of the video frames is labelled to generate annotated video frames. The annotated video frames and their corresponding point clouds are further evaluated to classify the objects in the video frames. The LiDAR data can also be used for such evaluation, as it can be used to generate precise, three-dimensional information about shape and structure of objects in a field of view of the LiDAR scanner, and such information enables in accurate object classification.

Optionally, the method may comprise training an image segmentation model using a machine learning algorithm, wherein upon training, the image segmentation model learns to perform the step of attributing the labels to each pixel of the video frames for generating the annotated video frames. The image segmentation model may be a deep learning model. The training of the image segmentation model is performed using reference images of the railway environment. Herein, the reference images are annotated and then used for training of the image segmentation model, wherein the annotated reference images depict objects such as trees, buildings, vehicles, people and so forth, in said environment. The machine learning algorithm may be, but not limited to, a clustering-based segmentation algorithm, a neural-network-based segmentation algorithm, and so forth. The image segmentation model can be a deep learning model that is trained to determine the objects present in the railway environment and also assign the same label to the pixels corresponding to a given object in the video frame.

Optionally, the method further comprises visually indicating a given violation in the second video and/or the third video. Optionally, in this regard, different types of violations may be indicated with different colours. As an example, pixels representing a safe cess violation as vegetation that heavily obstructs the safe cess, may be indicated in red colour; whereas pixels representing an overhead vegetation violation as vegetation present above the railway track, may be indicated in blue colour. A technical effect of providing such visual indication is that it makes identification of violations in the second video and/or the third video very convenient.

Optionally, the method further comprises:
- determining at least one corrective task that is to be implemented to mitigate the at least one violation; and
- sending a communication pertaining to the at least one corrective task, to the user device.

In this regard, the step of determining the at least one corrective task may be performed using a list of corrective tasks corresponding to violations. The at least one corrective task to be implemented depends on a type of the at least one violation, and may also depend on at least one of: a severity of the at least one violation, urgency of mitigating the at least one violation, availability of resources for implementing the at least one corrective task, and the like. For example, the at least one corrective task in an event of a safe cess violation by obstructive vegetation may be to clear off such vegetation that is obstructing the safe cess, to ensure clear passage for rail workers. Examples of communication pertaining to the at least one corrective task sent to the user device may be, but not limited to a visual indication, a text notification, an alarm, and so forth. Upon receiving such communication, the at least one corrective task may be initiated.

A second aspect of the invention provides a system for automatic digital inspection of a railway environment, according to the method of the first aspect, the system comprising:
- the at least one camera that is configured to capture the first video, wherein the at least one camera is mounted at least on the rail vehicle and the first video comprises the video frames representing the railway environment; and
- at least one processor communicably coupled to the at least one camera, wherein the at least one processor is configured to execute the steps of the method.

Throughout the present disclosure, the term "*processor*" relates to a computational element that is operable to respond to and process instructions. The at least one processor, in operation, implements the method for automatic digital inspection of the railway environment. Furthermore, the term "*processor*" may refer to one or more individual processors, processing devices and various elements associated with a processing device that may be shared by other processing devices. Such processors, processing devices and elements may be arranged in various architectures for responding to and executing the steps of the method.

Optionally, the at least one camera may also be mounted on at least one of:
- a fixed object present in the railway environment; and
- a movable object present in the railway environment.

As mentioned previously, the at least one camera is mounted at least on the rail vehicle. In this regard, the at least one camera may be mounted on a side of the rail vehicle to provide a view of surroundings in the proximity of the railway track in the railway environment. The side of the rail vehicle may be one or more of: a front side, a top side, a left side, a right side, a back side, an underside, of the rail vehicle. Furthermore, it is optionally possible that the at least one camera is also mounted on at least one other object present in the railway environment, besides the rail vehicle. The fixed object present in the railway environment may be an infrastructure element, such as a building, a pole, bridges, tunnel and so forth. The movable object present in the railway environment may comprise a drone, a robot and so forth, used for monitoring the railway environment. It will be appreciated that the rail vehicle, the fixed object, the movable object are external entities with respect to the system, and the at least one camera (which is a constituent of the system) could be arranged on one or more of such external entities.

Optionally, the system may further comprise a data repository communicably coupled to the at least one processor and/or the at least one camera, wherein the data repository is configured to store at least one of: the first video, point clouds generated using the video frames, labels attributed to each pixel of the video frames, the set of predefined rules, the inspection information, the second video, the third video. The term "*data repository*" refers to hardware, software, firmware, or a combination of these for storing a given information in an organised (namely, structured) manner, thereby, allowing for easy storage, access (namely, retrieval), updating and analysis of the given information. The data repository may be implemented as a memory of a device (such as the imaging system, the display apparatus, or similar), a removable memory, a cloud-based database, or similar. The data repository can be implemented as one or more storage devices. A technical effect of using the data repository is that it provides an ease of storage and access of processing inputs, as well as processing outputs.

A third aspect of the invention provides a computer program product for automatic digital inspection of a railway environment, the computer program product comprising a non-transitory machine-readable data storage medium having stored thereon program instructions that, when accessed by a processing device, cause the processing device to execute steps of a method of the first aspect. The term "*computer program product*" refers to a software product comprising program instructions that are recorded on the non-transitory machine-readable data storage medium, wherein the software product is executable upon a computing hardware for implementing the aforementioned steps of the method for automatic digital inspection of the railway environment.

In an embodiment, the non-transitory machine-readable data storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

Throughout the description and claims of this specification, the words "*comprise*" and "*contain*" and variations of the words, for example "*comprising*" and "*comprises*", mean "*including but not limited to*", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the following diagrams wherein:
Figure 1 is an illustration of a flowchart depicting steps of a method for automatic digital inspection of a railway environment, in accordance with an embodiment of the present disclosure;
Figure 2 is a block diagram representing a system for automatic digital inspection of a railway environment, in accordance with an embodiment of the present disclosure;
Figure 3 is an exemplary process flow for automatic digital inspection of a railway environment, in accordance with an embodiment of the present disclosure;
Figure 4 is an exemplary railway environment, in accordance with an embodiment of the present disclosure;
Figure 5 are exemplary violations in a railway environment, in accordance with an embodiment of the present disclosure; and
Figure 6 is an exemplary safe cess in a railway environment, in accordance with an embodiment of the present disclosure.

### DETAILED DESCRIPTION

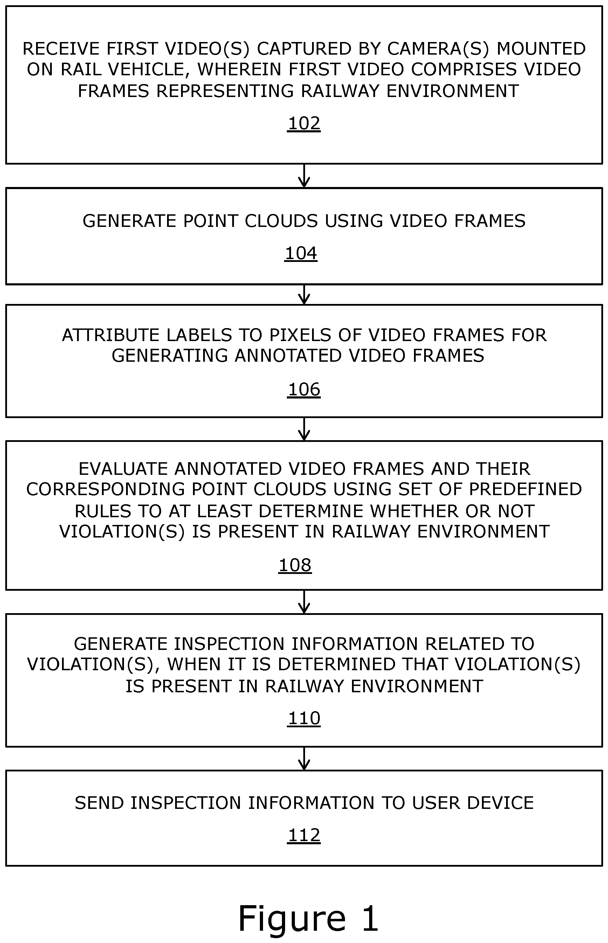

Referring to Figure 1, illustrated is a flowchart depicting steps of a method for automatic digital inspection of a railway environment, in accordance with an embodiment of the present disclosure. At step 102, at least a first video is captured by at least one camera mounted at least on a rail vehicle is received, wherein the first video comprises video frames representing the railway environment. At step 104, point clouds are generated using the video frames, wherein a given point cloud corresponds to a given set of video frames. At step 106, labels are attributed to each pixel of the video frames for generating annotated video frames. At step 108, the annotated video frames are evaluated and their corresponding point clouds using a set of predefined rules to at least determine whether or not at least one violation is present in the railway environment. At step 110, inspection information is generated related to the at least one violation, when it is determined that the at least one violation is present in the railway environment. At step 112, the inspection information is sent to a user device.

The aforementioned steps are only illustrative and other alternatives can also be provided where one or more steps are added, one or more steps are removed, or one or more steps are provided in a different sequence without departing from the scope of the claims herein.

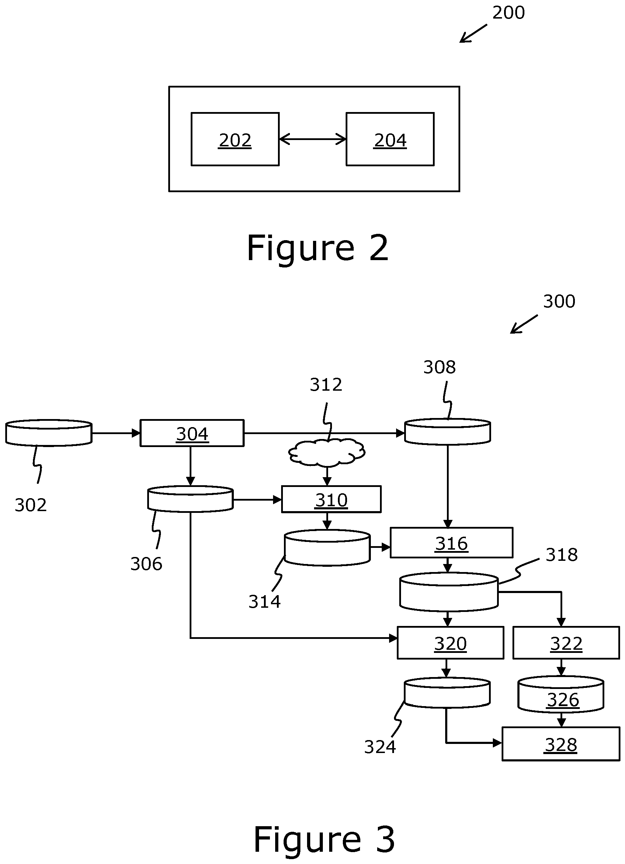

Referring to Figure 2, there is shown a block diagram representing a system 200 for automatic digital inspection of a railway environment, in accordance with an embodiment of the present disclosure. The system 200 comprises at least one camera 202 and at least one processor 204. The at least one camera 202 is communicably coupled with at least one processor 204. The at least one camera 202 is configured to capture a first video, wherein the first video comprises video frames representing the railway environment. The at least one processor 204 is communicably coupled to the at least one camera 202, wherein the at least one processor 204 is configured to execute steps of the method.

Referring to Figure 3, there is shown an exemplary process flow 300 for automatic digital inspection of a railway environment, in accordance with an embodiment of the present disclosure. Herein, a first video representing the railway environment is received from a storage 302 for generating a point cloud at a processing pipeline stage 304. Herein, the storage 302 is used to store the first video captured by at least one camera, and the processing pipeline stage 304 is used for point cloud generation. The video comprises video frames representing the railway environment, wherein the video frames are stored at a storage 306, while the point clouds are stored at a storage 308.

Subsequently, an image segmentation model 310 is trained using processing pipeline stage 312, wherein the processing pipeline stage 312 is a training process. The video frames stored at the storage 306 goes through the image segmentation model 310 to attribute labels to each pixel of the video frames for generating annotated video frames. The annotated video frames are stored at a storage 314.

Subsequently, the annotated video frames stored at the storage 314 and their corresponding point clouds stored at the storage 308 are evaluated for at least one violation as determined by a processing pipeline stage 316. An inspection information stored at a storage 318 is generated related to the at least one violation, when it is determined that the at least violation is present in the railway environment. Herein, the processing pipeline stage 316 comprises a list of violations, such as at least one of, high lineside violation, overhead vegetation violation, sign violation, signal violation, safe cess violation, based on which the annotated video frames and their corresponding point clouds are evaluated. The inspection information is sent to a user device, wherein the inspection information is raised as the at least one violation in the user device.

The inspection information is received from the storage 318 for generating a second video at a processing pipeline stage 320. Herein, the processing pipeline stage 320 is used to generate the second video comprising a plurality of annotated video frames that depict the at least one violation, based on the inspection information. Simultaneously, the inspection information is received from the storage 318 for generating a third video at a processing pipeline stage 322. Herein, the processing pipeline stage 322 is used to generate the third video by merging detections of the second video that depict the same violation into a single detection. The second video is stored at a storage 324, and the third video is stored at a storage 326. Consequently, the second video and the third video are sent to a user device 328. All the storages 302, 306, 308, 314, 318, 324, and 326 are a part of a data repository. These storages can be implemented separately or together.

Figure 3 is merely an example, which should not unduly limit the scope of the claims herein. A person skilled in the art will recognize many variations, alternatives, and modifications of embodiments of the present disclosure.

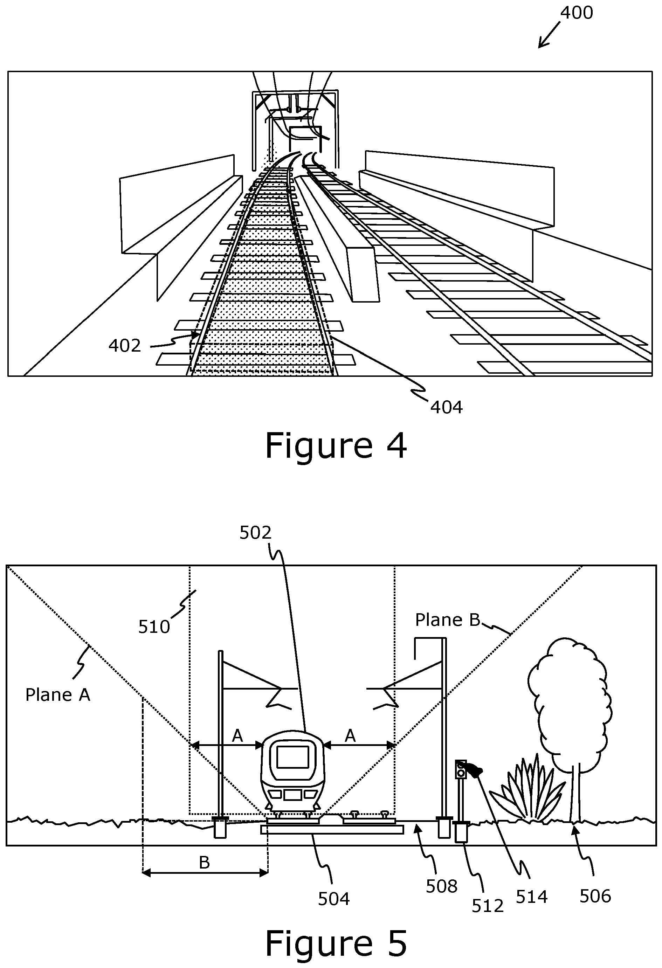

Referring to Figure 4, there is shown an exemplary railway environment 400, in accordance with an embodiment of the present disclosure. The railway environment 400 comprises a railway track 402. The railway track 402 may be detected in annotated video frames and their corresponding point clouds, and a bounding box 404 may be drawn in the annotated video frames, wherein the bounding box 404 is fitted to the railway track 402. Subsequently, it is determined whether at least one violation is present in the railway environment 400 when violation conditions are satisfied in respect to the bounding box 404.

Figure 4 is merely an example, which should not unduly limit the scope of the claims herein. A person skilled in the art will recognize many variations, alternatives, and modifications of embodiments of the present disclosure.

Referring to Figure 5, there are shown exemplary violations in a railway environment, in accordance with an embodiment of the present disclosure. The violations may be high lineside violation, safe cess violation, overhead vegetation violation and so forth. The railway environment may comprise a rail vehicle 502, a railway track 504, vegetation 506 and a cess 508. Two planes, namely Plane A and Plane B extend obliquely from two rails of the railway track 504. The angle between the Plane A or Plane B corresponding to a given rail and a ground surface may be 45 degrees. Notably, any obstruction that may be present in a first space 510 (between the plane A and the rail vehicle 504) is detected as the high lineside violation. The first space 510 is defined by the two planes (Plane A and Plane B), and extends within a predefined distance from the two rails. The predefined distance may, for example, be equal to 2 metres.

In case any obstruction is present beyond the predefined distance (for example, at a distance of 6 metres (as denoted by line B)) from the railway track 504 but in-between the planes A and B, the obstruction is not detected as the high lineside violation but is detected as a reduced sign or signal visibility or the safe cess violation. Herein, when the cess 508 adjacent to the railway track 504 is obstructed at least partially such that a distance between a non-obstructed region of the cess 508 and the railway track 504 is less than a predefined safety distance, then an unsafe situation (i.e., accidents and so forth) is created for the track workers.

In this regard, a violation is not detected when vegetation 506 is present in the railway environment as shown in the figure. However, in case the vegetation 506 extends above the railway track 504, such as for example, branches of a tree present in the vegetation 506 extend in a manner that the branches lie above the railway track 504, an overhead vegetation violation would be detected.

Furthermore, the railway environment may comprise a given signal 512. As an example, the given signal 512 may be partially or fully obscured by an object 514. This results in a signal violation.

Figure 5 is merely an example, which should not unduly limit the scope of the claims herein. A person skilled in the art will recognize many variations, alternatives, and modifications of embodiments of the present disclosure.

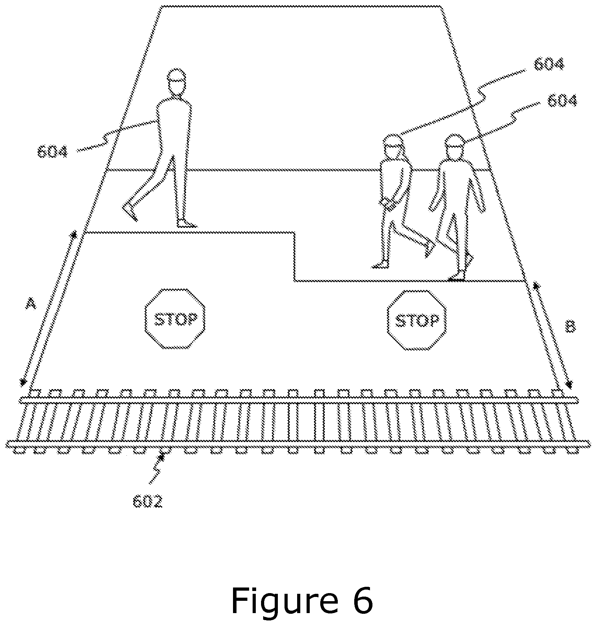

Referring to Figure 6, there is shown an exemplary safe cess in a railway environment, in accordance with an embodiment of the present disclosure. A safe cess is adjacent to a railway track 602 in the railway environment. The safe cess allows track workers 604 to safely transit the railway environment at a predefined safe area which is at a predefined distance (depicted as A and B) from the railway track 602. The predefined safety distance depends on a maximum speed at which a rail vehicle is permitted to run on the railway track 602. Herein, the predefined safety distance lies in a range of 2 metres to 2.75 metres when the maximum speed is equal to or greater than 100 miles per hour (depicted as the area above A) Furthermore, the predefined safety distance lies in a range of 1.25 metres to 2 metres when the maximum speed is less than 100 miles per hour.

Figure 6 is merely an example, which should not unduly limit the scope of the claims herein. A person skilled in the art will recognize many variations, alternatives, and modifications of embodiments of the present disclosure.

## Claims

1. A method for automatic digital inspection of a railway environment (400), the method comprising:
- receiving at least a first video captured by at least one camera (202) mounted at least on a rail vehicle (502), wherein the first video comprises video frames representing the railway environment;
- generating point clouds using the video frames, wherein a given point cloud correspond to a given set of video frames;
- attributing labels to each pixel of the video frames for generating annotated video frames;
- evaluating the annotated video frames and their corresponding point clouds using a set of predefined rules to at least determine whether or not at least one violation is present in the railway environment;
- generating inspection information related to the at least one violation, when it is determined that the at least one violation is present in the railway environment;
- sending the inspection information to a user device (328),
- generating a second video comprising a plurality of annotated video frames that depict the at least one violation, based on the inspection information;
- sending the second video to the user device;
- adding one or more video frames of the first video in the second video; **characterised by**:
- merging detections in the second video that depict the same violation into a single detection, based on the location of the at least one violation and its bounding box and on a temporal adjacency between the detections in the second video, to obtain a third video, wherein the third video comprises a lesser number of detections as compared to the second video; and
- sending the third video to the user device for display thereat.

2. A method according to claim 1, wherein the inspection information is in form of at least one of:
- an annotated image representing the at least one violation and its bounding box; and
- a file including at least one property of the at least one violation, wherein the at least one property is at least one of: a type, a location, a size, a time-point of occurrence in the first video, of the at least one violation.

3. A method according to any of the preceding claims, further comprising training an image segmentation model using a machine learning algorithm, wherein upon training, the image segmentation model learns to perform the step of attributing the labels to each pixel of the video frames for generating the annotated video frames.

4. A method according to any of the preceding claims, wherein the step of evaluating the annotated video frames and their corresponding point clouds comprises:
- detecting a railway track (402) in the annotated video frames and their corresponding point clouds, and drawing a bounding box (404) in the annotated video frames, wherein the bounding box is fitted to the railway track;
- associating the labels attributed to pixels of the annotated video frames to corresponding points within the point clouds; and
- determining that the at least one violation is present in the railway environment (400) when violation conditions specified in the set of predefined rules is satisfied in respect of the bounding box.

5. A method according to any of the preceding claims, wherein the set of predefined rules comprises at least one geometric rule and/or at least one custom-defined rule, the set of predefined rules comprising at least one of:
- determining that a high lineside violation is present when any unwanted object is present in a first space (510) that is defined by two planes extending obliquely within a predefined distance from two rails of a railway track (504);
- determining that an overhead vegetation violation is present when vegetation (506) is present in a second space lying vertically above the railway track;
- determining that a sign violation is present when a given sign in the railway environment is at least one of: obscured by another object, unreadable, vandalised;
- determining that a signal violation is present when a given signal (512) in the railway environment is at least one of: obscured by another object (514), malfunctioning, vandalised;
- determining that a safe cess violation is present when a cess (508) adjacent to the railway track is obstructed at least partially such that a distance between a non-obstructed region of the cess and the railway track is less than a predefined safety distance; and
- determining that a scrap rail violation is present when scrap rail is present on or in proximity of the railway track.

6. A method according to claim 5, wherein the predefined safety distance depends on a maximum speed at which the rail vehicle (502) is permitted to run on the railway track (602), and wherein:
- the predefined safety distance lies in a range of 2 metres to 2.75 metres when the maximum speed is equal to or greater than 100 miles per hour (44.704m/s); and
- the predefined safety distance lies in a range of 1.25 metres to 2 metres when the maximum speed is less than 100 miles per hour (44.704m/s).

7. A system (200) for automatic digital inspection of a railway environment (400), wherein the system (200) is configured to use a method of any of the claims 1-6, the system comprising:
- the at least one camera (202) that is configured to capture the first video, wherein the at least one camera is mountable at least on the rail vehicle (502) and the first video comprises the video frames representing the railway environment; and
- at least one processor (204) communicably coupled to the at least one camera, wherein the at least one processor is configured to execute the steps of the method.

8. A system (200) according to claim 7, wherein the at least one camera (202) is also mountable on at least one of:
- a fixed object present in the railway environment (400); and
- a movable object present in the railway environment.

9. A system (200) according to claim 7 or 8, wherein the system further comprises a data repository communicably coupled to the at least one processor (204) and/or the at least one camera (202), wherein the data repository is configured to store at least one of: the first video, point clouds generated using the video frames, labels attributed to each pixel of the video frames, the set of predefined rules, the inspection information, the second video, the third video.

10. A computer program product for automatic digital inspection of a railway environment, the computer program product comprising a non- transitory machine-readable data storage medium having stored thereon program instructions that, when accessed by a processing device, cause the processing device to execute steps of a method of any of the claims 1-6.

## Patentansprüche

1. Verfahren zur automatischen digitalen Inspektion einer Eisenbahnumgebung (400), das Verfahren umfassend:
- Empfangen mindestens eines ersten Videos, das von mindestens einer Kamera (202) aufgenommen wird, die mindestens an einem Schienenfahrzeug (502) angebracht ist, wobei das erste Video Videoeinzelbilder umfasst, die die Eisenbahnumgebung darstellen;
- Erzeugen von Punktwolken unter Verwendung der Videoeinzelbilder, wobei eine gegebene Punktwolke einem gegebenen Satz von Videoeinzelbildern entspricht;
- Zuordnen von Kennzeichnungen zu jedem Pixel der Videoeinzelbilder zum Erzeugen von annotierten Videoeinzelbildern;
- Bewerten der annotierten Videoeinzelbilder und ihrer entsprechenden Punktwolken unter Verwendung eines Satzes vordefinierter Regeln, um zumindest zu bestimmen, ob mindestens eine Störung in der Eisenbahnumgebung vorliegt oder nicht;
- Erzeugen von Inspektionsinformationen im Zusammenhang mit der mindestens einen Störung, wenn bestimmt wird, dass die mindestens eine Störung in der Eisenbahnumgebung vorliegt;
- Senden der Inspektionsinformationen an ein Benutzergerät (328),
- Erzeugen eines zweiten Videos, das eine Mehrzahl von annotierten Videoeinzelbildern umfasst, die die mindestens eine Störung darstellen, basierend auf den Inspektionsinformationen;
- Senden des zweiten Videos an das Benutzergerät;
- Hinzufügen eines oder mehrerer Videoeinzelbilder des ersten Videos in dem zweiten Video;
**gekennzeichnet durch**:
- Zusammenfügen von Detektionen in dem zweiten Video, die dieselbe Störung darstellen, in eine einzelne Detektion, basierend auf dem Ort der mindestens einen Störung und ihrem Begrenzungsrahmen und auf einer zeitlichen Nähe zwischen den Detektionen in dem zweiten Video, um ein drittes Video zu erhalten, wobei das dritte Video eine geringere Anzahl von Detektionen im Vergleich zu dem zweiten Video umfasst; und
- Senden des dritten Videos an das Benutzergerät zur Anzeige auf diesem.

2. Verfahren nach Anspruch 1, wobei die Inspektionsinformationen vorliegen in Form von mindestens einem von:
- einem annotierten Bild, das die mindestens eine Störung und ihren Begrenzungsrahmen darstellt;
und
- einer Datei, die mindestens eine Eigenschaft der mindestens einen Störung umfasst, wobei die mindestens eine Eigenschaft mindestens eine der folgenden ist: eine Art, ein Ort, eine Größe, ein Zeitpunkt des Auftretens der mindestens einen Störung in dem ersten Video.

3. Verfahren nach einem der vorhergehenden Ansprüche, das ferner ein Trainieren eines Bildsegmentierungsmodells unter Verwendung eines maschinellen Lernalgorithmus umfasst, wobei das Bildsegmentierungsmodell bei dem Trainieren erlernt, den Schritt des Zuordnens der Kennzeichnungen zu jedem Pixel der Videoeinzelbilder zum Erzeugen der annotierten Videoeinzelbilder durchzuführen.

4. Verfahren nach einem der vorhergehenden Ansprüche, wobei der Schritt des Bewertens der annotierten Videoeinzelbilder und ihrer entsprechenden Punktwolken Folgendes umfasst:
- Detektieren eines Eisenbahngleises (402) in den annotierten Videoeinzelbildern und ihrer entsprechenden Punktwolken und Zeichnen eines Begrenzungsrahmens (404) in den annotierten Videoeinzelbildern, wobei der Begrenzungsrahmen an das Eisenbahngleis angepasst ist;
- Assoziieren der den Pixeln der annotierten Videoeinzelbilder zugeordneten Kennzeichnungen mit entsprechenden Punkten in den Punktwolken; und
- Bestimmen, dass die mindestens eine Störung in der Eisenbahnumgebung (400) vorliegt, wenn Störungsbedingungen, die in dem Satz von vordefinierten Regeln spezifiziert sind, in Bezug auf den Begrenzungsrahmen erfüllt sind.

5. Verfahren nach einem der vorhergehenden Ansprüche, wobei der Satz von vordefinierten Regeln mindestens eine geometrische Regel und/oder mindestens eine benutzerdefinierte Regel umfasst, wobei der Satz von vordefinierten Regeln mindestens eines der folgenden umfasst:
- Bestimmen, dass eine hohe linienseitige Störung vorliegt, wenn ein beliebiges unerwünschtes Objekt in einem ersten Raum (510) vorliegt, der durch zwei Ebenen definiert ist, die sich schräg innerhalb eines vordefinierten Abstands von zwei Schienen eines Eisenbahngleises (504) erstrecken;
- Bestimmen, dass eine Hoch-Vegetations-Störung vorliegt, wenn Vegetation (506) in einem zweiten Raum vorhanden ist, der vertikal oberhalb des Eisenbahngleises liegt;
- Bestimmen, dass eine Zeichenstörung vorliegt, wenn ein gegebenes Zeichen in der Eisenbahnumgebung mindestens eines von Folgendem ist: durch ein anderes Objekt verdeckt, nicht lesbar, beschädigt;
- Bestimmen, dass eine Signalstörung vorliegt, wenn ein gegebenes Signal (512) in der Eisenbahnumgebung mindestens eines von Folgendem ist: durch ein anderes Objekt (514) verdeckt, gestört, beschädigt;
- Bestimmen, dass eine Störung bezüglich einer sicheren Zone vorliegt, wenn eine Zone (508) neben dem Eisenbahngleis mindestens teilweise derart blockiert ist, dass ein Abstand zwischen einem nicht versperrten Bereich der Zone und dem Eisenbahngleis kleiner als ein vordefinierter Sicherheitsabstand ist; und
- Bestimmen, dass eine Abfallschienenstörung vorliegt, wenn Abfallschienen auf oder in der Nähe des Eisenbahngleises vorhanden sind.

6. Verfahren nach Anspruch 5, wobei der vordefinierte Sicherheitsabstand von einer maximalen Geschwindigkeit abhängt, mit der das Schienenfahrzeug (502) auf dem Eisenbahngleis (602) fahren darf, und wobei:
- der vordefinierte Sicherheitsabstand in einem Bereich von 2 Meter bis 2,75 Meter liegt, wenn
die maximale Geschwindigkeit gleich oder größer als 100 Meilen pro Stunde (44,704 m/s) ist; und
- der vordefinierte Sicherheitsabstand in einem Bereich von 1,25 m bis 2 m liegt, wenn die maximale Geschwindigkeit geringer als 100 Meilen pro Stunde (44,704 m/s) ist.

7. System (200) zur automatischen digitalen Inspektion einer Eisenbahnumgebung (400), wobei das System (200) so konfiguriert ist, dass es ein Verfahren nach einem der Ansprüche 1-6 verwendet, wobei das System Folgendes umfasst:
- die mindestens eine Kamera (202), die konfiguriert ist, das erste Video aufzunehmen, wobei die mindestens eine Kamera mindestens an dem Schienenfahrzeug (502) montierbar ist und das erste Video die Videoeinzelbilder umfasst, die die Eisenbahnumgebung darstellen; und
- mindestens einen Prozessor (204), der mit der mindestens einen Kamera kommunikativ gekoppelt ist, wobei der mindestens eine Prozessor konfiguriert ist, die Schritte des Verfahrens auszuführen.

8. System (200) nach Anspruch 7, wobei die mindestens eine Kamera (202) ebenfalls an mindestens einem der folgenden montierbar ist:
- einem stationären Objekt, das in der Eisenbahnumgebung (400) vorhanden ist; und
- einem beweglichen Objekt, das in der Eisenbahnumgebung vorhanden ist.

9. System (200) nach Anspruch 7 oder 8, wobei das System ferner einen Datenspeicher umfasst, der mit dem mindestens einen Prozessor (204) und/oder der mindestens einen Kamera (202) kommunikativ gekoppelt ist, wobei der Datenspeicher konfiguriert ist, mindestens eines der folgenden zu speichern: das erste Video, unter Verwendung der Videoeinzelbilder erzeugte Punktwolken,
zu jedem Pixel der Videoeinzelbilder zugeordnete Kennzeichnungen, den Satz vordefinierter Regeln, die Inspektionsinformationen, das zweite Video, das dritte Video.

10. Computerprogrammprodukt zur automatischen digitalen Inspektion einer Eisenbahnumgebung, wobei das Computerprogrammprodukt ein nicht transitorisches maschinenlesbares Datenspeichermedium mit darauf gespeicherten Programmanweisungen umfasst, die, wenn eine Verarbeitungsvorrichtung auf sie zugreift, die Verarbeitungsvorrichtung veranlassen, Schritte eines Verfahrens nach einem der Ansprüche 1-6 auszuführen.

## Revendications

1. Procédé d'inspection numérique automatique d'un environnement ferroviaire (400), le procédé comprenant :
- la réception d'au moins une première vidéo capturée par au moins une caméra (202) montée au moins sur un véhicule ferroviaire (502), dans lequel la première vidéo comprend des trames vidéo représentant l'environnement ferroviaire ;
- la génération de nuages de points en utilisant les trames vidéo, dans lequel un nuage de points donné correspond à un ensemble donné de trames vidéo ;
- l'attribution d'étiquettes à chaque pixel des trames vidéo pour générer des trames vidéo annotées ;
- l'évaluation des trames vidéo annotées et de leurs nuages de points correspondants en utilisant un ensemble de règles prédéfinies pour au moins déterminer si au moins une violation est présente dans l'environnement ferroviaire ;
- la génération d'informations d'inspection liées à l'au moins une violation, lorsqu'il est déterminé que l'au moins une violation est présente dans l'environnement ferroviaire ;
- l'envoi des informations d'inspection à un dispositif utilisateur (328),
- la génération d'une deuxième vidéo comprenant une pluralité de trames vidéo annotées qui représentent l'au moins une violation, sur la base des informations d'inspection ;
- l'envoi de la deuxième vidéo au dispositif utilisateur ;
- l'ajout d'une ou plusieurs trames vidéo de la première vidéo dans la deuxième vidéo ;
**caractérisé par** :
- la fusion de détections dans la deuxième vidéo qui représentent la même violation en une détection unique, sur la base de l'emplacement de l'au moins une violation et de son cadre de délimitation et sur une contiguïté temporelle entre les détections dans la deuxième vidéo, pour obtenir une troisième vidéo, dans lequel la troisième vidéo comprend un nombre inférieur de détections par rapport à la deuxième vidéo ; et
- l'envoie de la troisième vidéo au dispositif utilisateur pour l'y afficher.

2. Procédé selon la revendication 1, dans lequel les informations d'inspection sont sous la forme d'au moins l'un parmi :
- une image annotée représentant l'au moins une violation et son cadre de délimitation ;
et
- un fichier comportant au moins une propriété de l'au moins une violation, dans lequel l'au moins une propriété est au moins l'un parmi : un type, un emplacement, une taille, un point temporel d'occurrence dans la première vidéo, de l'au moins une violation.

3. Procédé selon l'une quelconque des revendications précédentes, comprenant en outre l'entraînement d'un modèle de segmentation d'image en utilisant un algorithme d'apprentissage automatique, dans lequel, lors de l'entraînement, le modèle de segmentation d'image apprend à réaliser l'étape d'attribution des étiquettes à chaque pixel des trames vidéo pour générer les trames vidéo annotées.

4. Procédé selon l'une quelconque des revendications précédentes, dans lequel l'étape d'évaluation des trames vidéo annotées et de leurs nuages de points correspondants comprend :
- la détection d'une voie ferrée (402) dans les trames vidéo annotées et leurs nuages de points correspondants, et le dessin d'un cadre de délimitation (404) dans les trames vidéo annotées, dans lequel le cadre de délimitation est adapté à la voie ferrée ;
- l'association des étiquettes attribuées aux pixels des trames vidéo annotées à des points correspondants au sein des nuages de points ; et
- la détermination du fait que l'au moins une violation est présente dans l'environnement ferroviaire (400) lorsque des conditions de violation spécifiées dans l'ensemble de règles prédéfinies sont satisfaites par rapport au cadre de délimitation.

5. Procédé selon l'une quelconque des revendications précédentes, dans lequel l'ensemble de règles prédéfinies comprend au moins une règle géométrique et/ou au moins une règle définie sur mesure, l'ensemble de règles prédéfinies comprenant au moins l'une parmi :
- la détermination du fait qu'une violation côté ligne élevée est présente lorsqu'un objet indésirable quelconque est présent dans un premier espace (510) qui est défini par deux plans s'étendant obliquement au sein d'une distance prédéfinie à partir de deux rails d'une voie ferrée (504) ;
- la détermination du fait qu'une violation de végétation aérienne est présente lorsque la végétation (506) est présente dans un deuxième espace situé verticalement au-dessus de la voie ferrée ;
- la détermination du fait qu'une violation de panneau est présente lorsqu'un panneau donné dans l'environnement ferroviaire est au moins l'un parmi : occulté par un autre objet, illisible, vandalisé ;
- la détermination du fait qu'une violation de signal est présente lorsqu'un signal (512) donné dans l'environnement ferroviaire est au moins l'un parmi : occulté par un autre objet (514), dysfonctionnel, vandalisé ;
- la détermination du fait qu'une violation de sentier de garde-voie de sécurité est présente lorsqu'un sentier de garde-voie (508) adjacent à la voie ferrée est au moins partiellement entravé de sorte qu'une distance entre une région non entravée du sentier de garde-voie et la voie ferrée est inférieure à une distance de sécurité prédéfinie ; et
- la détermination du fait qu'une violation de rail de rebut est présente lorsque le rail de rebut est présent sur ou à proximité de la voie ferrée.

6. Procédé selon la revendication 5, dans lequel la distance de sécurité prédéfinie dépend d'une vitesse maximale à laquelle le véhicule ferroviaire (502) est autorisé à circuler sur la voie ferrée (602), et dans lequel :
- la distance de sécurité prédéfinie se situe dans une plage de 2 mètres à 2,75 mètres lorsque la vitesse maximale est égale ou supérieure à 100 milles par heure (44,704 m/s) ; et
- la distance de sécurité prédéfinie se situe dans une plage de 1,25 mètre à 2 mètres lorsque la vitesse maximale est inférieure à 100 milles par heure (44,704 m/s).

7. Système (200) pour l'inspection numérique automatique d'un environnement ferroviaire (400), dans lequel le système (200) est configuré pour utiliser un procédé selon l'une quelconque des revendications 1 à 6, le système comprenant :
- l'au moins une caméra (202) qui est configurée pour capturer la première vidéo, dans lequel l'au moins une caméra peut être montée au moins sur le véhicule ferroviaire (502) et la première vidéo comprend les trames vidéo représentant l'environnement ferroviaire ; et
- au moins un processeur (204) couplé en communication à l'au moins une caméra, dans lequel l'au moins un processeur est configuré pour exécuter les étapes du procédé.

8. Système (200) selon la revendication 7, dans lequel l'au moins une caméra (202) peut également être montée sur au moins l'un parmi :
- un objet fixe présent dans l'environnement ferroviaire (400) ; et
- un objet mobile présent dans l'environnement ferroviaire.

9. Système (200) selon la revendication 7 ou 8, dans lequel le système comprend en outre un référentiel de données couplé de manière à communiquer avec l'au moins un processeur (204) et/ou l'au moins une caméra (202), dans lequel le référentiel de données est configuré pour stocker au moins l'un parmi : la première vidéo, des nuages de points générés en utilisant les trames vidéo, des étiquettes attribuées à chaque pixel des trames vidéo, l'ensemble de règles prédéfinies, les informations d'inspection, la deuxième vidéo, la troisième vidéo.

10. Produit de programme informatique pour l'inspection numérique automatique d'un environnement ferroviaire, le produit de programme informatique comprenant un support de stockage de données non transitoire lisible par machine sur lequel sont stockées des instructions de programme qui, lorsqu'un dispositif de traitement y accède, amènent le dispositif de traitement à exécuter les étapes d'un procédé selon l'une quelconque des revendications 1 à 6.
